# EUROPEAN PATENT SPECIFICATION

(11) **EP 3 160 264 B1**
(45) Date of publication and mention of the grant of the patent: **21.09.2022**
(21) Application number: 15734548.9
(22) Date of filing: 26.06.2015
(51) Int. Cl.: A23L 33/10, A23L 2/66, A23L 2/68, A23L 2/02, A23L 23/00, A23J 3/20, A23L 33/17, A23L 33/185, A23L 17/60

(54) **METHOD OF MAKING A HIGH-PROTEIN ACIDIC LIQUID FOOD PRODUCT USING HIGH-PROTEIN MICROALGAE**
VERFAHREN ZUR HERSTELLUNG EINES FLÜSSIGEN SÄUERLICHEN PROTEINREICHEN LEBENSMITTELS UNTER VERWENDUNG VON MIKROALGEN MIT HOHEM PROTEINGEHALT
MÉTHODE DE FABRICATION D'UN PRODUIT ALIMENTAIRE LIQUIDE ACIDE À TENEUR ÉLEVÉE EN PROTÉINES UTILISANT DES MICROALGUES À TENEUR ÉLEVÉE EN PROTÉINES

(30) Priority: 27.06.2014 US 201462018417 P
(43) Date of publication of application: 03.05.2017
(73) Proprietor: Corbion Biotech, Inc., South San Francisco, CA 94080 (US)
(72) Inventor: KLAMCZYNSKA, Beata, South San Francisco, CA 94080 (US); ECHANIZ, Ana, South San Francisco, CA 94080 (US); ZHU, Ruolin, South San Francisco, CA 94080 (US)
(74) Representative: Carpmaels & Ransford LLP
(86) International application number: PCT/US2015/038172
(87) International publication number: WO 2015/200888

(56) References cited:
- WO-A1-2014/055830
- CN-A- 1 322 493
- JP-A- 2009 060 807
- US-A1- 2010 303 961
- US-A1- 2016 021 923
- J.L GUIL-GUERRERO ET AL: "Functional properties of the biomass of three microalgal species", JOURNAL OF FOOD ENGINEERING, vol. 65, no. 4, 1 December 2004 (2004-12-01), pages 511-517, XP055134285, ISSN: 0260-8774, DOI: 10.1016/j.jfoodeng.2004.02.014
- Donald E Pszczola: "Plugging into Proteins -IFT Plugging into Proteins INGREDIENTS Share +", , 1 February 2013 (2013-02-01), XP055654402, Retrieved from the Internet: URL:https://www.ift.org/news-and-publicati ons/food-technology-magazine/issues/2013/f ebruary/columns/ingredients [retrieved on 2019-12-04]

## Description

### Technical Field

The present invention relates to a method of making a high protein liquid acidic food product comprising microalgal protein from microalgal flour.

### Background

As the human population continues to increase, there is a growing need for additional food sources, particularly food sources that are inexpensive to produce and nutritious. Moreover, the current reliance on meat as the staple of many diets, at least in the most developed countries, contributes significantly to the release of greenhouse gases. There is a need for new foodstuffs that are less harmful to the environment to produce.

Requiring only water and sunlight to grow, algae have long been looked to as a potential source of food. While certain types of algae, primarily seaweed, do indeed provide important foodstuffs for human consumption, the promise of algae as a foodstuff has not been fully realized. Algal powders made with algae grown photosynthetically in outdoor ponds or photobioreactors are commercially available but have a deep green color (from the chlorophyll) and a strong, unpleasant taste. When formulated into food products or as nutritional supplements, these algal powders impart a visually unappealing green color to the food product or nutritional supplement and have unpleasant fish, seaweed or other flavors.

There are several species of algae that are used in foodstuffs today, most being macroalgae such as kelp, purple laver (*Porphyra,* used in nori), dulse (*Palmaria palmate)* and sea lettuce (*Ulva lactuca).* Microalgae, such as Spirulina (*Arthrospira platensis)* are grown commercially in open ponds (photosynthetically) for use as a nutritional supplement or incorporated in small amounts in smoothies or juice drinks (usually less than 0.5% w/w). Other microalgae, including some species of *Chlorella* are popular in Asian countries as a nutritional supplement. Poor flavor is a major factor that has impeded the widespread adoption of microalgae in food. WO2010/045368, WO2010/120923, PCT/US13/65369, and PCT/US14/013405 disclose methods of making and using microalgal biomass as a food. These references disclose the growth of microalgae, especially *Chlorella protothecoides,* in a dark environment, to produce a non-green microalgal biomass.

Low pH food products such as beverages (including fruit and tomato juices), dressings, condiments, tomato soups, tomato sauces, etc. are difficult to supplement with added protein (e.g. soy protein isolate or whey protein) because the protein tends to aggregate and precipitate when heated in pasteurization or hot-fill steps. The problem is worse for low pH products than for neutral pH products because the low pH destabilizes proteins. Thus, alternate and improved methods for supplementing foods, especially low-pH foods, with protein are needed.

Protein has been shown to induce satiety. Consuming a diet high in protein can facilitate reaching fitness and nutritional goals. Nutritionists and bodybuilders often recommend diets that are high in protein to help build muscle and/or lose fat. Supplementing low pH foods like fruit juices, dressings, and sauces with protein can increase the nutritional density or can transform nutritionally deficient foods into satiety inducing, nontraditional sources of protein. Supplementing low pH foods with microalgal flour and/or microalgal protein allows for this transformation without substantially changing the flavor, mouthfeel, texture or viscosity of the food product. This marks a valuable improvement for consumers seeking protein-rich food products that are flavorful and pleasant to eat or drink. Supplementing low pH food products with microalgal proteinor microalgal flour provides consumers with a variety of foods that retain their flavor and texture and reap the benefits of the additional protein.

US2010/0303961 discloses methods of inducing satiety by providing microalgae-based foods and discloses that microalgal biomass contains high levels of dietary fiber and/or digestible crude protein and/or low saturation triglyceride oil. Homogenization methods to liberate free oil and fiber are disclosed for enhancing the feeling of satiety in a human, thereby reducing caloric intake. The provision of such materials to a human is said to have the further benefit of providing heart-healthy microalgae-based ingredients while achieving levels of satiety sufficient to reduce further caloric intake.

### Summary

The present invention provides a method for making a high protein liquid food product comprising microalgal protein from microalgal flour as set out in claim 1. After the heating step, the product does not have a gritty texture resulting from protein precipitation from the heating step..

The protein-supplemented liquid may be a fruit juice, salad dressing or sauce.

The high-protein microalgal flour used in the method can be comprised predominantly of intact microalgal cell bodies of heterotrophically cultivated microalgae.

The heating step may comprise sterilizing the protein-supplemented liquid by HTST and/or hot-filling a container.

The heating step may comprise sterilizing the protein-supplemented liquid by LTLT; and/or hot-filling a container.

The HTST step may include heating to between 60-140°C for between 5 to 60 seconds or heating to between 70-100°C for between 5 to 60 seconds.

The method may produce a food product including at least 5, 10, 20, 30, 40 or 50% protein.

The heating step may have temperature and time parameters such that at least a 1, 2, 3, 4, or 5 log reduction in bacterial load is achieved.

The microalgal flour can comprise dried *Chlorella.* The *Chlorella* can be non-green, yellow or yellow-white in color. The *Chlorella* may also be a color-mutant. The *Chlorella* may be of the species *Chlorella protothecoides.*

Alternatively, the microalgal flour may comprise dried *Prototheca,* optionally *Prototheca moriformis.*

The microalgal flour used in the method may have cells with, on average, less than 20%, 15%, or 14% lipid. The microalgal flour used in the method may have cells with, on average, 5-20, 7-14, 8-13, or 10-13% lipid.

The low-pH food product produced according to the method of the invention may comprise 1%, 2%, 3%, 4% or 5% microalgal flour, or a range of from 1-5%, 1-4%, 1-3%, 1-2%, 2-5%, 2-4%, 2-3%, 3-5%, 3-4%, or 4-5% microalgal flour. The low-pH food product produced according to the method of the invention may induce satiety upon consumption, and in some cases can aid in losing weight and/or building muscle when consumed as part of a high-protein diet.

The low pH food product produced according to the method of the invention may be a fruit beverage comprising microalgal flour at a concentration of 3-5% by weight.

### Brief Description of the Drawings

The features of the invention will be more readily understood by reference to the following detailed description, taken with reference to the accompanying drawings.
Fig. 1 shows a flow diagram depicting a method of producing a food product in accordance with the present invention.
Fig. 2 shows measurements of the viscosity of acidic solutions of high-protein microalgae, whey and soy protein after heating at 70°C for varying amounts of time.

### Detailed Description of the Invention

As used herein, in connection with a range, the term "between" shall be inclusive of the endpoints.

The terms "microalgal powder" and "microalgal flour" are used interchangeably and mean a particulate dried cultured microalgae cell product with particles suitably sized for effective dispersion in a liquid.

In connection with microalgal cells of a microalgal flour, "intact" shall mean that the cells have not been treated with a disruption technique such as bead-milling designed to expose and release intracellular components. As a result, the cell walls of the microalgal cells are essentially continuous so as to contain the intracellular proteins.

The present invention is based on the discovery that acidic foods can be supplemented with microalgal protein in a way that allows for the use of microbial control techniques (e.g. pasteurization, HTST and hot-filling) without substantial precipitation or aggregation of the protein and without large changes in viscosity of the food. Not only is the microalgal protein supplementation ecologically and nutritionally advantageous, it also bypasses rheological and associated sensory problems resulting from heat-treating acidic liquid foods that have been supplemented with whey, soy protein, and many other unmodified protein concentrates.

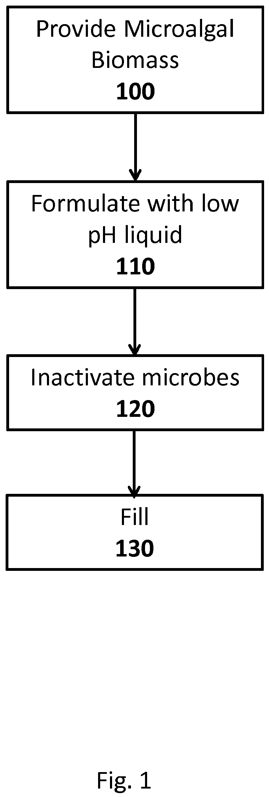

Fig. 1 illustrates a method for producing a low-pH food product, in accordance with the invention. A microalgal biomass is provided (step **100).** The biomass can be produced according to the methods described in WO2010/045368, WO2010/120923, PCT/US13/65369 and/or PCT/US14/013405. The biomass is high in protein and has predominantly intact cells. For example, the biomass can comprise at least 30, 35, 40, 45, 50, 55, 60, or 65% protein by dry cell weight and be comprised of at least 60, 70, 80, 90, or 95% intact (unlysed) microalgal cells. The microalgal biomass can be in the form of a powder or flour in order to facilitate dispersion in the food product. As described in the above references, the microalgal cells can be produced by heterotrophic cultivation with washing, pasteurization and spray drying. The microalga may be a eukaryotic microalga of the taxonomy: *Chlorophyta, Trebouxiophyceae, Chlorellales, Chlorellaceae, or Chlorophyceae.* The microalgal species used to produce the powder can be chosen to produce a non-green biomass without the use of bleaching. Such species include non-green *Chlorella* such as *Chlorella protothecoides* or a non-green color-mutant of a green *Chlorella* or other microalgae. The color-mutants can produce a flour that is white, tan, or light yellow (see WO2010/045368 and WO2010/120923). Alternatively, the microalgal species can be a non-green, obligately heterotrophic, microalga such as a species of the genus *Prototheca* such as *Prototheca stagnorum, P. moriformis, P. kruegeri, P. cutis, P. zopfii, P. ulmea, P. wickerhamii,* or *P. blaschkeae.* To avoid an unpleasant taste, the microalga can produce long chain polyunsaturates such as DHA at very low levels. For example, DHA can be less than 5, 3, 2, 1, 0.5 or 0.1% of the microalga and biomass. This is true of the *Chlorella* and *Prototheca* genera for example. In specific embodiments, the cells of the microalgal flour can comprise, on average, 5-20, 7-14, 8-13, or 10-13, or 13-20% lipid.

Because the microalgal cells are intact, the intracellular proteins will be protected from aggregating with the intracellular proteins of other cells, even after harsh pathogen inactivation steps. The cell walls will render the cells as a whole stably dispersible in the liquid. The cells can be intact such that at least 70, 75, 80, 85, 90, or 95% of the intracellular proteins remain within the cell at various stages of the process including in the completed food product.

The microalgal biomass can be combined with other ingredients to form a low pH food product (step 110). The other ingredients can be inherently acidic as in the case of a fruit juice, coffee or tomato product, or can be adjusted to have a low pH by including an acid as an ingredient. For example, vinegar or solid citric acid can be added. The acidic food product can be, for example, a fruit juice, vegetable juice, hot and sour soup, a pickle (vegetable or otherwise), salad dressing, coffee beverage or sauce (including tomato sauce). The final pH after addition of all ingredients is 4.6 or less. This meets the definition of an acid food or an acidified food under Title 21, part 114 of the US Code of Federal Regulations (CFR).

The low pH food is then subjected to a microbial inactivation step (step 120). Although pasteurization (including HTST) is most commonly used, other techniques can be used including high pressure treatment, pulsed electric field, ultrasound and ultraviolet light. For those microbial inactivation techniques that cause protein precipitation (e.g. in whey and soy protein-supplemented foods), the use of the high-protein microalgal biomass can prevent unwanted changes in viscosity and organoleptic properties. The inactivation step can result in 1, 2, 3, 4, or 5 log, or greater reduction in microbial counts. The inactivation step may meet US Food and Drug Administration guidelines and regulations for processing juice including those related to CFR Title 21, including part 120 and related HACCP (hazard analysis and critical control points) including regulations and guidelines for 5 log pathogen reduction.

For example, where HTST is used, the liquid may move through a heating zone while subjected to temperatures between 71.5 and 74°C for about 15 to 30 seconds. For example, the US standard for flash pasteurization of milk can be used; i.e. 71.7°C for 15 seconds (shown to give 5 log reduction in harmful bacteria). Inactivation can be determined by microbial testing or using an appropriate model such as alkaline phosphatase inactivation.

The liquid may be treated at between 60-140°C for 5-60 seconds, 70-100°C for 5-60 seconds, 70-90°C for 6 to 60 seconds, 70-80°C for 5 to 60 seconds, 70-90°C for 10 to 40 seconds or 70-80°C for 10 to 40 seconds.

Alternatively, the liquid is pasteurized at a low temperature for a long time (LTLT). For example, the liquid can be treated under batch pasteurization conditions of 63°C FOR 30-60 minutes. The conditions can be altered provided that sufficient bacterial inactivation is achieved. The liquid may be heated at a temperature of between 55-69°C for 10 to 120 minutes or between 60-68°C for 15 to 100 minutes, from 61-67°C for 20 to 80 minutes or from 62-66°C for 25 to 60 minutes. Time and temperature conditions can be chosen or optimized to give a 5 log reduction in pathogens.

The food product can then be placed in an appropriate container (step 130). HTST and hot-filling may be used on an acid food or acidified food. Because the food is at a low-pH, expensive aseptic filling is not necessary. For avoidance of doubt, aseptic filling is technically compatible with the invention and can be practised; however, it is more expensive.

The steps described above can be used in numerous combinations resulting in a low-pH liquid food product that is supplemented with 0.5% or more microalgal protein yet does not become sandy, gritty or chalky or increase substantially in viscosity after a microbial inactivation step. The viscosity increases after the pathogen inactivation step by no more than 0.5, 1, 2, 5, 7 or 10%. The heating step can have temperature and time parameters such that at least a 1, 2, 3, 4, or 5 log reduction in bacterial load is achieved.

The pathogen inactivation step may be a heating step having temperature and time parameters such that if a 10% high-protein microalgal flour solution at pH 6.0 were heated in the heating step, the viscosity of the solution would increase by no more than 5%, whereas the viscosity of a 10% whey or soy protein solution at pH 6 would increase by at least 10%.

The pathogen inactivation step may be a heating step having temperature and time parameters such that if a 10% high-protein microalgal flour solution at pH 4.0 were heated in the heating step, the viscosity of the solution would increase by no more than 5%, whereas the viscosity of a 10% whey or soy protein solution at pH 6 would increase by at least 10%.

The pathogen inactivation step may be a heating step having temperature and time parameters such that if a 10% high-protein microalgal flour solution at pH 3.3 were heated in the heating step, the viscosity of the solution would increase by no more than 5%, whereas the viscosity of a 10% whey or soy protein solution at pH 6 would increase by at least 10%.

The use of intact cells protects proteins without the need for adding hydrocolloid stabilizers such as pectin, carrageenan, plant gums or the like.

A microalgal flour of *Chlorella protothecoides* may be produced heterotrophically in a dark environment so as to have at least 50% protein by dry cell weight, less than 200 ppm of chlorophyll and less than 5% DHA. The flour is mixed with a low-pH liquid such as fruit juice, sauce or salad dressing so that the acidic liquid comprises at least 1% microalgal protein and has a pH of 4.6 or less. The microalgal protein-supplemented acidic liquid is heat treated under conditions sufficient to inactivate at least 3 logs of pathogens and hot filled. The viscosity of the liquid increases by less than 10% after the heat treatment.

A microalgal flour of *Chlorella protothecoides* may be produced heterotrophically in the dark so as to have at least 55% protein by dry cell weight, less than 100 ppm of chlorophyll and less than 3% DHA. The flour is mixed with a low-pH liquid such as fruit juice or salad dressing so that the acidic liquid comprises at least 2% microalgal protein and has a pH of 4.6 or less. The microalgal protein-supplemented acidic liquid is heat treated under conditions sufficient to inactivate at least pathogens by at least 4 logs and hot filled. The viscosity of the liquid increases by less than 10% after the heat treatment.

A microalgal flour of *Chlorella protothecoides* may be produced heterotrophically in a dark environment so as to have at least 60% protein by dry cell weight, less than 50 ppm of chlorophyll and less than 2% DHA. The flour is mixed with a low-pH liquid such as fruit juice or salad dressing so that the acidic liquid comprises at least 4% microalgal protein and has a pH of 4.6 or less. The microalgal protein-supplemented acidic liquid is heat treated under conditions sufficient to inactivate pathogens by at least 5 logs and hot filled. The viscosity of the liquid increases by less than 10% after the heat treatment.

A microalgal flour of *Chlorella protothecoides* may be produced heterotrophically in a dark environment so as to have at least 60% protein by dry cell weight, less than 50 ppm of chlorophyll and less than 2% DHA. The microalgal flour comprises intact cells such that at least 85% of the intracellular protein in the cells remains in the cells. The flour is mixed with a low-pH liquid such as fruit juice or salad dressing so that the acidic liquid comprises at least 4% microalgal protein and has a pH of 4.6 or less. The microalgal protein-supplemented acidic liquid is heat treated under conditions sufficient to inactivate pathogens by at least 5 logs and hot filled. The viscosity of the liquid increases by less than 10% after the heat treatment.

A microalgal flour of *Chlorella protothecoides* may be produced heterotrophically in a dark environment so as to have at least 60% protein by dry cell weight, less than 20 ppm of chlorophyll and less than 1% DHA. The microalgal flour comprises intact cells such that at least 90% of the intracellular protein in the cells remains in the cells. The flour is mixed with a low-pH liquid such as fruit juice or salad dressing so that the acidic liquid comprises at least 5% microalgal protein and has a pH of 4.6 or less. The microalgal protein-supplemented acidic liquid is heat treated under conditions sufficient to inactivate pathogens by at least 5 logs and hot filled. The viscosity of the liquid increases by less than 10% after the heat treatment.

A microalgal flour of *Chlorella protothecoides* may be produced heterotrophically in a dark environment so as to have at least 60% protein by dry cell weight, less than 20 ppm of chlorophyll and less than 1% DHA. The microalgal flour comprises intact cells such that at least 90% of the intracellular protein in the cells remains in the cells. The flour is mixed with a low-pH liquid such as fruit juice or salad dressing so that the acidic liquid comprises at least 7% microalgal protein and has a pH of 4.6 or less. The microalgal protein-supplemented acidic liquid is heat treated under conditions sufficient to inactivate pathogens by at least 5 logs and hot filled. The viscosity of the liquid increases by less than 10% after the heat treatment.

A microalgal flour of *Chlorella protothecoides* may be produced heterotrophically in a dark environment so as to have at least 60% protein by dry cell weight, less than 20 ppm of chlorophyll and less than 1% DHA. The microalgal flour comprises intact cells such that at least 90% of the intracellular protein in the cells remains in the cells. The flour is mixed with a low-pH liquid such as fruit juice or salad dressing so that the acidic liquid comprises at least 10% microalgal protein and has a pH of 4.6 or less. The microalgal protein-supplemented acidic liquid is heat treated under conditions sufficient to inactivate pathogens by at least 5 logs and hot filled. The viscosity of the liquid increases by less than 10% after the heat treatment.

A microalgal flour of *Chlorella protothecoides* may be produced heterotrophically in a dark environment so as to have at least 60% protein by dry cell weight, less than 20 ppm of chlorophyll and less than 1% DHA. The microalgal flour comprises intact cells such that at least 90% of the intracellular protein in the cells remains in the cells. The flour is mixed with a low-pH liquid such as fruit juice or salad dressing so that the acidic liquid comprises at least 10% microalgal protein and has a pH of 4.6 or less. The microalgal protein-supplemented acidic liquid is HTST treated under conditions sufficient to inactivate pathogens by at least 5 logs and hot filled. The viscosity of the liquid increases by less than 10% after the HTST treatment.

### Example 1: Protein determination

Crude protein concentration for the microalgal flour was determined by the Dumas method applying an adjustment factor of 6.25.

### Example 2: Whole algal protein flour vs. whey and soy protein - changes in viscosity after heat treatment

We tested the viscosity of acidic solutions of 10% high-protein *Chlorella protothecoides* flour comprising about 65% crude protein by dry cell weight ("whole algal protein" or "WAP") under conditions that simulate typical food processing conditions. The solutions were heated for 0 min, 10 min and 20 min at 70°C. We used 10% whey and soy protein as comparators. The experiment was performed at pH 3.3, 4.0 and 6.0.

The instrument used in the experiment was the Brookfield LV DV-II+ Pro with the small sample adapter or the UL adapter. The different adapters allowed measurement of viscous (but pourable) to low viscosity fluids. We used the UL adapter for the low viscosity protein solutions and this required about 25-30mL of fluid. The small sample adapter is for the more viscous protein solutions, and this required 10-20mL of fluid. The instrument was also measuring all the protein solutions at a consistent 22°C with help from a thermosel connected to a controlled water bath set to 22°C.

The procedure was to measure the viscosity of the solutions at different shear rates and then compare the proteins where the fluids have constant viscosity. In the experiment, the different protein solutions show constant viscosity between shear rate 61-66 s⁻¹.

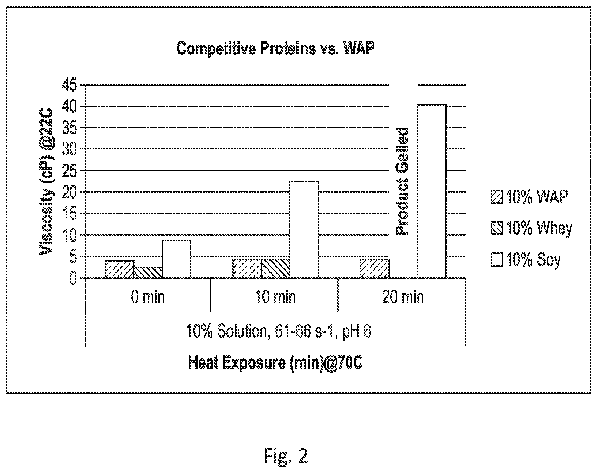

As can be seen in Fig. 2 and Table 1, the 10% whole-cell algal protein (WAP) solution at pH 6 was far more resistant to heat than was the whey or soy protein after 10 or 20 minutes at 70°C. The whey protein solution's viscosity almost doubled after 10 minutes and gelled after 20 minutes. The whey solution was no longer measurable after 20 minutes at 70°C because the solution solidified/gelled. The solution started out clear but became opaque with heat. The soy protein solution's viscosity almost tripled after 10 minutes and more than quadrupled after 20 minutes. In contrast, the WAP solution retained a nearly unchanged viscosity of less than 5 mPa·s (5 cP) at 22°C after both 10 and 20 minutes of heat treatment at 70°C.

Likewise, as can be seen from Table 1, at pH 4.0, soy protein was especially unstable at pH 3.3. and 6.0, whey protein was especially unstable at pH 4.0 and 6.0 but the WAP was stable under all three conditions, with a viscosity that did not exceed 4.7.

**Table 1. Viscosity of protein solutions after heating for various times at a shear-rate of 61-66 per second. The NA designation is a result of gelation (i.e. too viscous to measure).**

| 70°C (min) | Shear rate | pH | 10% WAP | 10% Whey | 10% Soy |
|---|---|---|---|---|---|
| 0 | 61-66 (s-1) | 3.3 | 3.76 | 2.63 | 38 |
| | | 4.0 | 3.85 | 2.64 | 6.05 |
| | | 6.0 | 4.38 | 2.65 | 8.84 |
| 10 | 61-66 (s-1) | 3.3 | 3.86 | 6.27 | 41.8 |
| | | 4.0 | 3.92 | 17.3 | 6.54 |
| | | 6.0 | 4.48 | 4.48 | 22.5 |
| 20 | 61-66 (s-1) | 3.3 | 3.85 | 6.24 | 43.7 |
| | | 4.0 | 4.00 | 27.4 | 6.45 |
| | | 6.0 | 4.64 | NA | 40.1 |

### Example 3: Protein beverage formulation

Components of a protein beverage were experimentally combined in various proportions to achieve a surprising and unexpected result. Microalgal flour was introduced to numerous fruit juices and concentrates in various combinations to identify compatible and appealing low pH fruit beverages. In one experiment, juices or concentrates of passion fruit, blueberry and raspberry were combined with microalgal flour; in another experiment, juices or concentrates of raspberry, cranberry and lemon were combined with microalgal flour. In further experiments, other flavors were tested. In yet another experiment, juices or concentrates of passion fruit and mango were combined with microalgal flour; in another experiment, juices or concentrates of mango and pineapple were combined with microalgal flour.

In additional experiments, protein levels as well as flavors were adjusted. In at least three formulations, microalgal flour comprised 3%, 4%, or 5%, by weight of the respective batches, resulting in beverages that could be characterized as strong and savory, sweet and sour or balanced.

An exemplary low pH beverage with tropical flavors is provided below. In this beverage, juices, concentrates and flavors of several fruits were combined with microalgal flour to create an appealing juice drink with 5 grams of protein per 240 gram serving and a final pH of 4.2.

Low pH fruit beverages made with pea protein or rice protein instead of algal flour were unacceptable because the non-algal protein precipitated out and the texture of the beverage was chalky and gritty. Additionally, the viscosity of the low pH beverages made with pea protein or rice protein increased significantly, making the beverages unacceptable.

The low pH tropical fruit flavored beverage was made by the following procedure.

Microalgal flour (3% by dry weight of the finished formula) was mixed with cane sugar (2% by dry weight of the finished formula). To this dry mixture, water (16% dry weight of the finished formula), orange juice (38.74% dry weight of the finished formula) and apple juice (35.38% dry weight of the finished formula) were added, combined using a high speed mixer and allowed to sit for 30 minutes. After 30 minutes, tropical concentrate (4.6% dry weight of the finished formula), mango flavor (0.08% dry weight of the finished formula) and tropical flavor (0.1% dry weight of the finished formula) were added to the protein-water-juice formulation. The pH of the formulation was measured and adjusted using citric acid (0.1% dry weight of the finished formula) until the combination reached the desired level of acidity (pH 4.2). The formulation was heated to approximately 88°C for 45 seconds, poured into containers and cooled to approximately 4°C. As discussed above, beverages made with non-algal proteins were unacceptable because the precipitated pea protein and rice protein made the beverage chalky and gritty. Viscosity of the beverage was minimally impacted by the addition of algal protein and was very similar to typical juices that were not fortified with protein. The texture of the formulation was smooth and very similar to typical juices that were not fortified with protein.

**Table 2. Tropical protein beverage formulation: Ingredients**

| Ingredient | Percent |
|---|---|
| Orange Juice, single strength | 38.74% |
| Apple Juice, single strength | 35.38% |
| Cane Sugar | 2.00% |
| Tropical Concentrate^{∗} | 4.60% |
| Water | 16.00% |
| Whole Algal Flour | 3.00% |
| Mango Flavor^{∗∗} | 0.08% |
| Tropical Flavor^{∗∗∗} | 0.10% |
| Citric Acid | 0.10% |

| | |
|---|---|
| ^{∗}Vendor: Northwest Naturals ^{∗∗}Vendor: Carmi PROD13930 ^{∗∗∗}Vendor: Mane S201203407 | |

**Table 3. Tropical protein beverage formulation: Nutrition facts per 240g serving.**

| | Amount per Serving | % Daily Value^{∗} |
|---|---|---|
| **Calories** | 160 | |
| **Calories from Fat** | 10 | |
| **Total Fat** | 1g | 2% |
| Saturated Fat | 0g | 0% |
| Trans Fat | 0g | |
| **Cholesterol** | Omg | 0% |
| **Sodium** | 60mg | 3% |
| **Total Carbohydrate** | 32g | 11% |
| Dietary Fiber | 1g | 4% |
| Sugars | 27g | |
| **Protein** | 5g | |
| Vitamin A | | 0% |
| Vitamin C | | 100% |
| Calcium | | 2% |
| Iron | | 4% |

| | | |
|---|---|---|
| ^{∗}Percent Daily Values are based on a 2000 kcal (2,000 calorie) diet. | | |

## Claims

1. A method for making a high-protein acidic liquid food product comprising 1-5, 5-10, 10-15 or 15-20% weight/weight microalgal protein from microalgal flour, the method comprising:
(a) making a protein-supplemented acidic liquid by combining an acidic liquid with high-protein microalgal flour, or combining a non-acidic liquid with high-protein microalgal flour and an acid, to arrive at a microalgal protein-supplemented liquid having a pH of 4.6 or less; and
(b) subjecting the protein-supplemented liquid to a heating step so as to inactivate microbes,
wherein, after the heating step, the dynamic viscosity, when measured at 22°C and a shear rate of 61-66 s⁻¹, of the liquid increases by no more than 0.5, 1, 2, 5, 7 or 10%; and
wherein the high-protein microalgal flour comprises at least 55% microalgal cell protein by dry weight.

2. The method of claim 1, wherein the protein-supplemented liquid is a fruit juice, salad dressing, or sauce.

3. The method of claim 1 or claim 2, wherein the high-protein microalgal flour is comprised predominantly of intact microalgal cell bodies of heterotrophically-cultivated microalgae.

4. The method of any one of claims 1-3, wherein the heating step comprises:
(a) sterilizing the protein-supplemented liquid by HTST; and/or
(b) hot-filling a container.

5. The method of any one of claims 1-3, wherein the heating step comprises:
(a) sterilizing the protein-supplemented liquid by LTLT; and/or
(b) hot-filling a container.

6. The method of claim 4, wherein the HTST step comprises:
(a) heating to between 60-140°C for between 5 and 60 seconds; or
(b) heating to between 70-100°C for between 5 and 60 seconds.

7. The method of any one of claims 1-6, wherein the heating step has temperature and time parameters such that at least a 1, 2, 3, 4, or 5 log reduction in bacterial load is achieved.

8. The method of any one of claims 1-7, wherein the microalgal flour comprises dried *Chlorella,* and optionally wherein:
(a) the flour is not green in color; or
(b) the *Chlorella* is yellow or yellow-white in color; or
(c) the *Chlorella* is a color-mutant.

9. The method of claim 8, wherein the *Chlorella* is of the species *Chlorellaprotothecoides.*

10. The method of any one of claims 1-7, wherein the microalgal flour comprises dried *Prototheca,* optionally *Prototheca moriformis.*

11. The method of any one of claims 1-10, wherein the microalgal flour has cells with, on average:
(a) less than 20%, 15%, or 14% lipid; or
(b) 5-20, 7-14, 8-13, or 10-13% lipid.

## Patentansprüche

1. Verfahren zur Herstellung eines proteinreichen sauren flüssigen Lebensmittelprodukts, welches 1 bis 5, 5 bis 10, 10 bis 15 oder 15 bis 20 % (Gewicht/Gewicht) an Mikroalgenprotein aus Mikroalgenmehl umfasst, wobei das Verfahren Folgendes umfasst:
(a) Herstellen einer an Protein angereicherten sauren Flüssigkeit, indem eine saure Flüssigkeit mit einem proteinreichen Mikroalgenmehl vereinigt wird oder indem eine nicht-saure Flüssigkeit mit einem proteinreichen Mikroalgenmehl und einer Säure vereinigt wird, um eine an Mikroalgenprotein angereicherte Flüssigkeit mit einem pH-Wert von 4,6 oder weniger zu erzielen; und
(b) Einwirkenlassen einen Erhitzungsschrittes auf die an Protein angereicherte Flüssigkeit, sodass Mikroorganismen inaktiviert werden,
wobei sich die dynamische Viskosität der Flüssigkeit, wenn sie bei 22 °C und einer Schergeschwindigkeit von 61 bis 66 s⁻¹ gemessen wird, infolge des Erhitzungsschrittes um höchstens 0,5, 1, 2, 5, 7 oder 10 % erhöht; und
wobei das proteinreiche Mikroalgenmehl mindestens 55 % Mikroalgenzellprotein nach Trockengewicht umfasst.

2. Verfahren nach Anspruch 1, wobei es sich bei der an Protein angereicherten Flüssigkeit um Fruchtsaft, Salatdressing oder Soße handelt.

3. Verfahren nach Anspruch 1 oder Anspruch 2, wobei das proteinreiche Mikroalgenmehl überwiegend aus intakten Mikroalgenzellkörpern oder heterotroph angezüchteten Mikroalgen besteht.

4. Verfahren nach einem beliebigen der Ansprüche 1 bis 3, wobei der Erhitzungsschritt Folgendes umfasst:
(a) Sterilisieren der an Protein angereicherten Flüssigkeit mittels HTST; und/oder
(b) Einfüllen in einen Behälter in heißem Zustand.

5. Verfahren nach einem beliebigen der Ansprüche 1 bis 3, wobei der Erhitzungsschritt Folgendes umfasst:
(a) Sterilisieren der an Protein angereicherten Flüssigkeit mittels LTLT; und/oder
(b) Einfüllen in einen Behälter in heißem Zustand.

6. Verfahren nach Anspruch 4, wobei der HTST-Schritt Folgendes umfasst:
(a) Erhitzen über einen Zeitraum zwischen 5 und 60 Sekunden auf eine Temperatur zwischen 60 und 140 °C; oder
(b) Erhitzen über einen Zeitraum zwischen 5 und 60 Sekunden auf eine Temperatur zwischen 70 und 100 °C.

7. Verfahren nach einem beliebigen der Ansprüche 1 bis 6, wobei die Temperatur- und Zeitparameter des Erhitzungsschritts derart sind, dass eine Verringerung der bakteriellen Belastung um mindestens 1, 2, 3, 4 oder 5 log erzielt wird.

8. Verfahren nach einem beliebigen der Ansprüche 1 bis 7, wobei das Mikroalgenmehl getrocknete *Chlorella* umfasst, und wobei möglicherweise:
(a) das Mehl nicht von grüner Farbe ist; oder
(b) die *Chlorella* von gelber oder gelbweißer Farbe ist; oder
(c) die *Chlorella* eine Farbmutante ist.

9. Verfahren nach Anspruch 8, wobei die *Chlorella* von der Art *Chlorella protothecoides* ist.

10. Verfahren nach einem beliebigen der Ansprüche 1 bis 7, wobei das Mikroalgenmehl getrocknete *Prototheca,* möglicherweise *Prototheca moriformis,* umfasst.

11. Verfahren nach einem beliebigen der Ansprüche 1 bis 10, wobei das Mikroalgenmehl Zellen aufweist, die im Durchschnitt Folgendes haben:
(a) weniger als 20 %, 15 % oder 14 % Flüssigkeit; oder
(b) 5 bis 20, 7 bis 14, 8 bis 13 oder 10 bis 13 % Flüssigkeit.

## Revendications

1. Procédé pour la préparation d'un produit alimentaire liquide acide hautement protéiné comprenant 1 à 5, 5 à 10, 10 à 15 ou 15 à 20 % poids/poids de protéines de microalgues à partir d'une farine de microalgues, le procédé comprenant :
(a) la préparation d'un liquide acide supplémenté en protéines en combinant un liquide acide avec une farine de microalgues hautement protéinée, ou en combinant un liquide non acide avec une farine de microalgues hautement protéinée et un acide, pour arriver à un liquide supplémenté en protéines de microalgues possédant un pH de 4,6 ou moins ; et
(b) la soumission du liquide supplémenté en protéines à une étape de chauffage de sorte à inactiver des microbes,
dans lequel, après l'étape de chauffage, la viscosité dynamique, lorsqu'elle mesurée à 22 °C et une vitesse de cisaillement de 61 à 66 s⁻¹, du liquide augmente de pas plus de 0,5, 1, 2, 5, 7 ou 10 % ; et
la farine de microalgues hautement protéinée comprenant au moins 55 % de protéines de cellules de microalgues par poids sec.

2. Procédé selon la revendication 1, le liquide supplémenté en protéines étant un jus de fruits, une sauce de salade ou une sauce.

3. Procédé selon la revendication 1 ou la revendication 2, la farine de microalgues hautement protéinée étant composée de manière prédominante de corps cellulaires de microalgues intacts de microalgues cultivées de manière hétérotrophe.

4. Procédé selon l'une quelconque des revendications 1 à 3, l'étape de chauffage comprenant :
(a) la stérilisation du liquide supplémenté en protéines par HTST ; et/ou
(b) le remplissage à chaud d'un récipient.

5. Procédé selon l'une quelconque des revendications 1 à 3, l'étape de chauffage comprenant :
(a) la stérilisation du liquide supplémenté en protéines par LTLT ; et/ou
(b) le remplissage à chaud d'un récipient.

6. Procédé selon la revendication 4, l'étape d'HTST comprenant :
(a) un chauffage jusqu'à une température comprise entre 60 et 140 °C pendant entre 5 et 60 secondes ; ou
(b) un chauffage jusqu'à une température comprise entre 70 et 100 °C pendant entre 5 et 60 secondes.

7. Procédé selon l'une quelconque des revendications 1 à 6, l'étape de chauffage possédant des paramètres de température et de temps tels qu'au moins une réduction de 1, 2, 3, 4 ou 5 log de la charge bactérienne soit atteinte.

8. Procédé selon l'une quelconque des revendications 1 à 7, la farine de microalgues comprenant *Chlorella* séchée, et éventuellement :
(a) la farine n'étant pas de couleur verte ; ou
(b) la *Chlorella* étant de couleur jaune ou jaune-blanche ; ou
(c) la *Chlorella* étant un mutant couleur.

9. Procédé selon la revendication 8, la *Chlorella* étant de l'espèce *Chlorella protothecoides.*

10. Procédé selon l'une quelconque des revendications 1 à 7, la farine de microalgues comprenant *Prototheca* séchée, éventuellement *Prototheca moriformis.*

11. Procédé selon l'une quelconque des revendications 1 à 10, la farine de microalgues possédant des cellules comportant, en moyenne :
(a) moins de 20 %, 15 % ou 14 % de lipides ; ou
(b) 5 à 20, 7 à 14, 8 à 13 ou 10 à 13 % de lipides.
